# EUROPÄISCHE PATENTSCHRIFT

(11) **EP 1 517 395 B1**
(45) Veröffentlichungstag und Bekanntmachung des Hinweises auf die Patenterteilung: **20.09.2017**
(21) Anmeldenummer: 04019529.9
(22) Anmeldetag: 18.08.2004
(51) Int. Cl.: H01Q 1/22, H01Q 1/36, H02G 3/12, H01H 9/00

(54) **Elektrisches Installationsgerät mit Funkantenne**
Electrical installation device with a radio frequency antenna
Appareil d'installation électrique avec une antenne haute fréquence

(30) Priorität: 19.09.2003 DE 20314538 U
(43) Veröffentlichungstag der Anmeldung: 23.03.2005
(73) Patentinhaber: Merten GmbH, 51674 Wiehl (DE)
(72) Erfinder: Ansorge, Rainer, 51709 Marienheide (DE)
(74) Vertreter: dompatent von Kreisler Selting Werner - Partnerschaft von Patent- und Rechtsanwälten mbB

(56) Entgegenhaltungen:
- EP-A- 0 436 804
- EP-A2- 1 195 786
- DE-A- 4 411 290
- DE-C- 19 812 185
- GB-A- 2 252 828

## Beschreibung

Die Erfindung betrifft ein Installationsgerät mit Funkantenne, mit einem an einem metallischen Tragrahmen befestigten Gerätesockel, einem dem Gerätesockel vorgesetzten Betätigungsorgan und einem Funkübertrager, der berührungslos mit einer Funkantenne gekoppelt ist.

Unter einem Installationsgerät ist ein Schalter, Dimmer oder ein anderes elektrisches Gerät, das in einer Installationsdose untergebracht werden kann, zu verstehen. Installationsgeräte werden normalerweise in Unterputzdosen installiert, jedoch können sie auch in Verbindung mit Aufputzdosen benutzt werden. Installationsgeräte werden normalerweise manuell durch Berühren oder Verstellen eines Betätigungsorgans bedient. Das Installationsgerät schaltet dann beispielsweise eine Leuchte oder einen anderen elektrischen Verbraucher. Bekannt sind auch Installationsgeräte mit Funkantenne, bei denen die Betätigung von einem entfernten Ort aus erfolgen kann. Derartige Installationsgeräte enthalten einen Funkempfänger, der das Funksignal empfängt und daraufhin ein Stellsignal für den elektrischen Schalter oder Dimmer erzeugt. Auf diese Weise ist es möglich, den Verbraucher sowohl mit dem Betätigungsorgan des Installationsgeräts als auch von einem entfernten Ort aus mit einem anderen Betätigungsorgan per Funk zu steuern.

Ein derartiges Installationsgerät ist aus DE 299 13 500 U1 bekannt. Dieses Installationsgerät weist einen im Gerätesockel enthaltenen Funkempfänger auf. Die Antenne des Funkempfängers ist in einer an dem Gerätesockel schwenkbar angebrachten Tür vorgesehen. Die Antenne ist daher in oder nahe an dem Gerätesockel des Installationsgerätes angeordnet. Bei einer Wanddose liegt sie bündig hinter der Wandoberfläche. Dies ist eine für Antennen sehr ungünstige Position. Die Antenne sollte zur Eliminierung von Wandeinflüssen möglichst vor der Wand angeordnet sein, um einen hohen Empfangswirkungsgrad zu erzielen.

Bei einem in DE 101 25 913 A1 beschriebenen Installationsgerät mit Funkantenne ist die Antenne an dem Tragrahmen angeordnet, der hier aus Kunststoff besteht. Auch hier befindet sie sich noch im wandnahen Bereich. In allen Fällen ist die Antenne physisch mit dem Funkempfänger verbunden.

DE 198 12 185 C1 beschreibt ein Installationsgerät, bei dem die Antenne an einer metallischen oder metallisierten Baugruppe angebracht ist, die eine Trägerplatte oder eine Abdeckung bildet, wobei die genannte Baugruppe die Antennenfunktion übernimmt.

Der Oberbegriff des Patentanspruchs 1 geht aus von einem Installationsgerät, wie es in EP1195786 A2 beschrieben ist. Dieses Installationsgerät weist ein Gehäuse und ein Betätigungsorgan auf. Das Gehäuse enthält einen Sensor und eine Leiterplatte. Die Leiterplatte trägt eine gedruckte Schaltung, wozu auch eine Antenne gehört, sowie verschiedene elektrische Komponenten, die zusammen mit der Antenne einen Sender bilden. EP 0 436 804 A2 der Anmelderin beschreibt eine Installationseinheit mit einer Trägerplatte und einem daran befestigten Sockel. Für den Anschluss einer Datenbusleitung ist eine Anschlussvorrichtung aus einem Block vorgesehen, der über Kontaktelemente mit dem Sockel verbindbar ist. An der Vorderseite des Installationsgerätes befindet sich ein bewegbares Betätigungsorgan, das im Falle der Betätigung einen Mikroschalter schaltet. Eine Funkübertragung findet nicht statt.

Der Erfindung liegt die Aufgabe zugrunde, ein Installationsgerät mit Funkantenne zu schaffen, das eine hohe Antennenempfindlichkeit ermöglicht und auf einfache Weise gefertigt werden kann.

Das erfindungsgemäße Installationsgerät weist die Merkmale des Anspruchs 1 auf. Es ist dadurch gekennzeichnet, dass an dem Tragrahmen ein Gerätesockel befestigt ist, dem ein Betätigungsorgan vorgesetzt ist, und dass die Funkantenne an dem Betätigungsorgan angeordnet ist.

Der Begriff Funkübertrager umfasst im Rahmen der vorliegenden Erfindung sowohl einen Funkempfänger als auch einen Funksender. In der Regel ist das Installationsgerät im Empfangsende der Funkstrecke vorgesehen. Im Rahmen der Erfindung besteht aber auch die Möglichkeit, ein derartiges Installationsgerät senderseitig vorzusehen, wobei dann der Funkübertrager als Sender ausgebildet ist.

Die Erfindung geht von dem Gedanken aus, dass bei einem Installationsgerät das am weitesten vorstehende Teil das Betätigungsorgan ist. Bei einem üblichen Schalter handelt es sich um die Schaltwippe und bei einem Annäherungsschalter um die Kontaktplatte, an die sich die Hand annähert. Es wird davon ausgegangen, dass das Installationsgerät ein manuell beeinflussbares Betätigungsorgan aufweist, obwohl es auch durch Fernsteuerung bedient werden kann.

Da die Funkantenne an dem Betätigungsorgan angeordnet ist, hat sie einen gewissen Abstand vor der Wand, so dass sie geringer durch Wandeinflüsse bzw. durch den Einfluss des metallischen Tragrahmens des Installationsgerätes beeinflusst wird. Die Funkübertragung erfolgt in der Regel mit Hochfrequenz, und zwar im ISM-Band. Die Übertragungsfrequenz liegt hier bei 868 MHz. In diesem Frequenzbereich können sich Metallteile, die der Antenne benachbart sind, nachteilig auf das Antennenverhalten auswirken. Die Unterbringung in dem aus Kunststoff bestehenden Betätigungsorgan sorgt dafür, dass die Antenne einen hinreichenden Abstand von anderen Metallteilen hat. Die Kopplung zwischen der Funkantenne und dem Funkübertrager erfolgt berührungslos, also durch Wellenleiterankopplung oder kapazitiv. Da bei kapazitiver Kopplung relativ große Kondensatorflächen benötigt würden, wird die Wellenleiterankopplung vorgezogen, wobei die Antenne als Kopplungselement einen an dem Betätigungsorgan vorgesehenen Streifenleiter aufweist.

Gemäß der Erfindung ist die Antenne einschließlich eines Kopplungselements auf die Rückseite des Betätigungsorgans aufgedruckt. Eine solche Bedruckung kann beispielsweise vorsehen, dass ein Streifen von etwa 2 mm Breite aus einem hochleitfähigen Silberleitlack aufgedruckt wird. Die Länge des Kopplungselements und die Länge der Antenne sind abhängig von der Wellenlänge und den dielektrischen Eigenschaften des Trägermaterials. Die Länge der gedruckten Struktur kann so gewählt werden, dass bei der Betriebsfrequenz eine höhere Empfangsleistung eintritt, wobei die Antenne Eigenresonanzeigenschaften mit dem angekoppelten Funkübertrager zeigt. Die elektrische Länge der Antenne ist ein Vielfaches von λ/4, wobei λ die Wellenlänge der Funkfrequenz bildet.

Der Funkübertrager kann auf einer Platine enthalten sein, die in einer passenden Ausnehmung einer Trägerplatte festgesetzt ist, wobei die Trägerplatte an der Rückseite des Betätigungsorgans befestigt ist. Auf diese Weise wird an dem Betätigungsorgan, das in der Regel nach Art eines Deckels ausgebildet ist, eine rückwärtige Tasche gebildet, die den Funkübertrager aufnimmt. Dabei können Platinen von unterschiedlichem Typ vorgesehen sein, die mit derselben Trägerplatte zusammenpassen. Auf diese Weise kann das Installationsgerät in Verbindung mit unterschiedlichen Funkübertragern benutzt werden, wobei sich die einzelnen Typen von Installationsgeräten nur durch unterschiedliche Funkübertrager auf der Platine unterscheiden. Dies trägt wesentlich zu einer Typenvereinheitlichung bei.

Gemäß einer bevorzugten Ausgestaltung der Erfindung weist die Platine abstehende Kontaktstifte auf, die in eine Fassung an der Frontseite des Gerätesockels einsteckbar sind. Auf diese Weise wird der Funkübertrager, der zusammen mit der Antenne an dem Betätigungsorgan angebracht ist, mit dem Gerätesockel verbunden, sobald das Betätigungsorgan an den Gerätesockel montiert wird.

Im Folgenden wird unter Bezugnahme auf die Zeichnungen ein Ausführungsbeispiel der Erfindung näher erläutert.

Es zeigen:
- Fig. 1: eine schematische Seitenansicht eines Installationsgerätes, wobei das Betätigungsorgan ein Stück weit von dem Gerätesockel abgezogen ist,

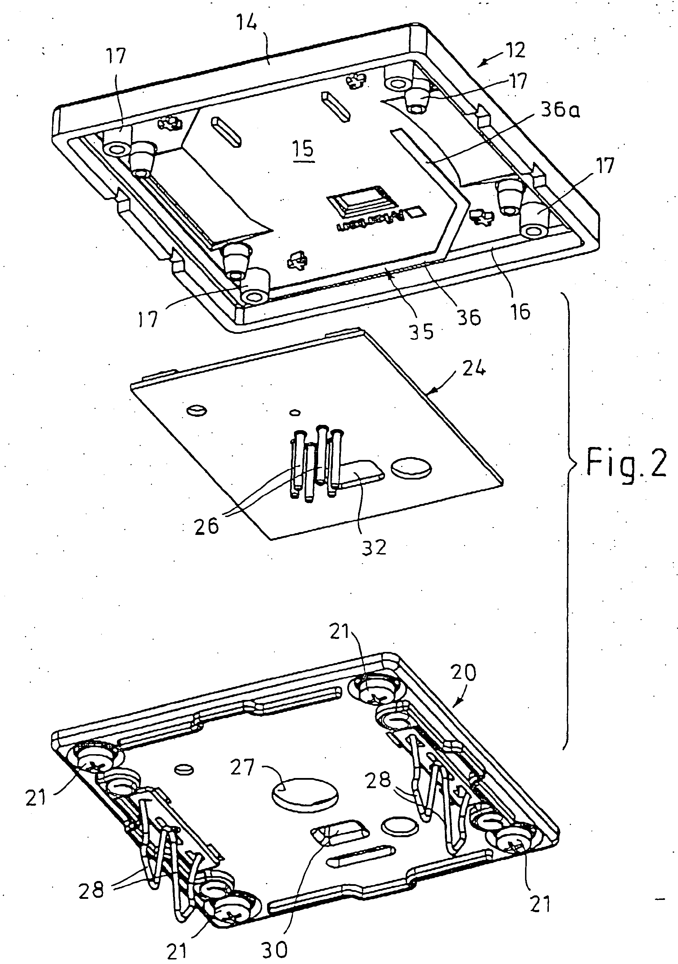

- Fig. 2: eine Explosionsdarstellung des Betätigungsorgans mit den daran befestigten Teilen in einer Ansicht schräg von unten, und

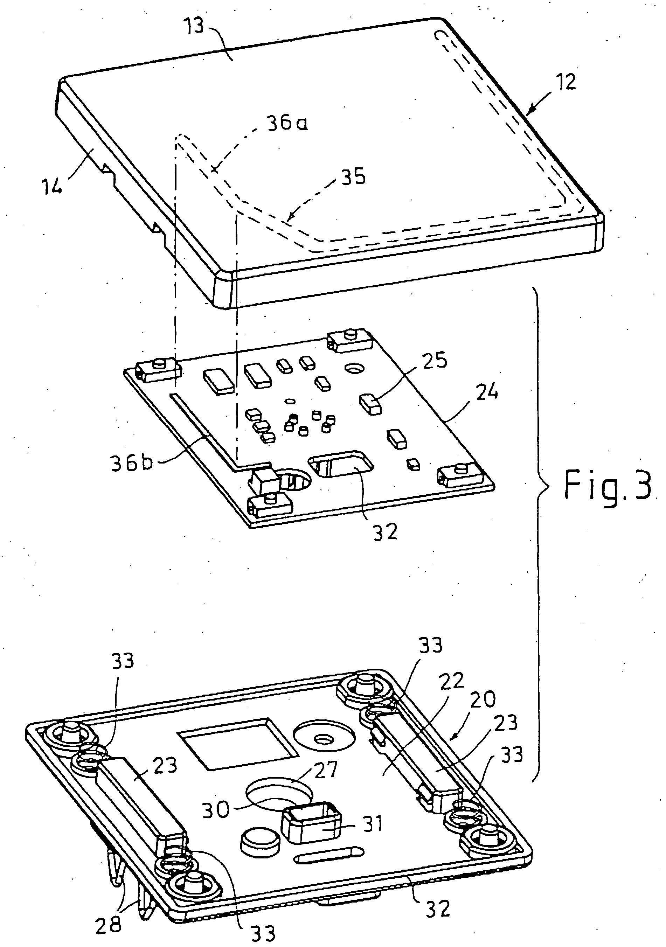

- Fig. 3: eine Explosionsdarstellung des Betätigungsorgans mit den daran befestigten Teilen in einer Ansicht schräg von oben.

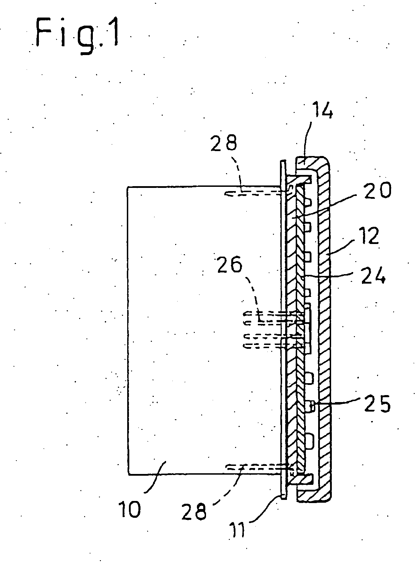

Das in Figur 1 schematisch dargestellte Installationsgerät weist einen Gerätesockel 10 auf, der beispielsweise in eine Wanddose eingesetzt werden kann und dort mit Krallen verspannt wird. An dem vorderen Ende des Gerätesockels 10, der aus Kunststoff besteht, befindet sich ein Tragrahmen 11, der flanschartig über die Frontseite des Gerätesockels hinausragt. Der metallische Tragrahmen 11 wird bündig gegen die Wand des Raumes gesetzt. Dem Tragrahmen 11 wird das Betätigungsorgan 12 vorgesetzt. Hierbei handelt es sich um eine Betätigungsplatte, die auch als Schaltwippe ausgebildet sein kann. Das Betätigungsorgan 12 weist eine leicht gewölbte Platte 13 auf, die einen umlaufenden Rand 14 hat, so dass das Betätigungsorgan von der Rückseite aus betrachtet eine Wanne 15 bildet. Ein auf der Innenseite des Randes 14 umlaufender Stufenabsatz 16 bildet einen Anschlag zur Positionierung einer Trägerplatte 20. Die Trägerplatte 20 wird mit ihrem Rand gegen den Stufenabsatz 16 gesetzt und dann mit Schrauben 21 an dem Betätigungsorgan 12 befestigt. Zu diesem Zweck weist das Betätigungsorgan an der Rückseite Rohrstutzen 17 auf, in die die Schrauben 21 eingeschraubt werden. Die Trägerplatte hat an ihrer Vorderfläche 22 Erhebungen 23, die dazu dienen, eine Platine 24 festzulegen. Die Platine 24 ist Bestandteil des Funkübertragers 25, dessen Bauteile auf der Platine miteinander verdrahtet sind. Die Platine 24 befindet sich auf der Vorderseite der Trägerplatte 20. Sie hat nach hinten abstehende Kontaktstifte 26, die durch ein Loch 27 in der Trägerplatte hindurchragen und in entsprechende Kontaktbuchsen des Gerätesockels 10 eingesteckt werden. An der Rückseite der Trägerplatte 20 befinden sich nach hinten abstehende Federklemmen 28, die in entsprechende Öffnungen des metallischen Tragrahmens 11 eingesteckt werden und somit die Trägerplatte an dem Gerätesockel 10 festhalten. Die Trägerplatte 20 weist ferner ein Durchgangsloch 30 auf, das vorderseitig von einem rohrförmigen Sockel 31 gebildet wird. Der Sockel 31 dient als Zentrierung für eine Öffnung 32 in der Platine 24. Das als Deckel ausgebildete Betätigungsorgan 12, dessen Rand 14 den Rand 32 der Trägerplatte übergreift, wird durch Schraubenfedern 33 abgestützt, die in entsprechenden Sacklöchern der Trägerplatte zentriert und gehalten sind und das Betätigungsorgan in Richtung nach vorne vorspannen. Das Betätigungsorgan kann entgegen der Wirkung der Federn 33 gedrückt werden, um einen Schaltvorgang auszuführen.

Die Antenne 35 des Funkübertragers 25 befindet sich auf der Innenseite des als Kunststoffformteil ausgebildeten Betätigungsorgans 12. Die Antenne 35 besteht aus einem Streifenleiter 36, der auf die Rückseite des Betätigungsorgans mit hochleitfähigem Silberleitlack aufgedruckt ist. Die Antenne 35 besteht aus mehreren Leiterabschnitten, die eine abgewinkelte Struktur bilden. Einer der Leiterabschnitte bildet ein Kopplungselement 36a, das einem Kopplungselement 36b auf der Platine 24 kongruent gegenüberliegt. Das Kopplungselement 36b besteht aus einem Leiterstreifen auf der Frontseite der Platine. Die Kopplungselemente 36a und 36b bilden eine Wellenleiterankopplung, die auch als Gammamatch bezeichnet wird. Wenn der Funkübertrager 25 ein Empfänger ist, empfängt die Funkantenne 35 externe Signale und koppelt sie über die Kopplungselemente 36a,36b in den Empfänger ein. Ist dagegen der Funkübertrager ein Sender, so wirkt die Funkantenne 35 als Sendeantenne. In jedem Fall ist die Kopplung zwischen dem Funkübertrager 25 und der Funkantenne 35 berührungslos.

Die Trägerplatte 20 ist so ausgebildet, dass sie mit unterschiedlichen Platinen 24, welche unterschiedliche Funkübertrager 25 tragen, kombiniert werden kann. Es ist daher lediglich erforderlich, an die Trägerplatte jeweils eine andere Platine 24 anzustecken. Im Übrigen kann das Installationsgerät in unterschiedlichen Typen, d.h. mit unterschiedlichen Platinen 24 bereitgehalten werden, während die übrigen Komponenten gleich sind.

Die Zentrierelemente 17 dienen dazu, das Betätigungsorgan 12 in Bezug auf die Trägerplatte 20 zentriert zu halten, damit die Kopplungselemente 36a,36b in einer definierten Relativposition zueinander gehalten werden.

Die Länge der gedruckten Antennenstruktur ist so gewählt, dass bei der Arbeitsfrequenz im Bereich von 868 MHz Eigenresonanzen entstehen, so dass eine höhere Empfangsleistung eintritt. Die elektrische Länge der Antennenstruktur beträgt das Vielfache von λ/4.

Mit dem Installationsgerät kann ein Verbraucher dadurch geschaltet werden, dass das Betätigungsorgan 12 gedrückt wird. Ferner kann der Verbraucher auch von einem entfernten Ort aus über ein Sendesignal betätigt werden, das von dem Empfänger 25 empfangen wird und einen im Gerätesockel enthaltenen Schalter betätigt.

## Patentansprüche

1. Installationsgerät mit einem Gerätesockel (10);
einem vorderseitig mit dem Gerätesockel (10) verbundenen metallischen Tragrahmen (11), dem ein Betätigungsorgan (12) vorgesetzt ist;
einer Trägerplatte (20) mit einer Platine (24), die sich auf der Vorderseite der Trägerplatte (20) befindet, wobei die Trägerplatte (20) an der Rückseite des als Deckel ausgebildeten Betätigungsorgan (12) befestigt ist;
einem auf der Platine (24) enthaltenen Funkübertrager (25); und einer Funkantenne (35), die mit dem Funkübertrager (25) gekoppelt ist,
**dadurch gekennzeichnet,**
**dass** die Funkantenne (35) einschließlich eines Kopplungselementes (36a) auf die Rückseite des als Kunststoffformteil ausgebildeten Betätigungsorgans (12) aufgedruckt ist, wobei das Kopplungselement (36a) mit einem, auf der Platine (24) kongruent gegenüberliegend angeordneten, zweiten Kopplungselement (36b) eine Wellenleiterankopplung bildet, sodass der Funkübertrager (25) durch Wellenleiterankopplung mit der Antenne (35) berührungslos gekoppelt ist.

2. Installationsgerät nach Anspruch 1, **dadurch gekennzeichnet, dass** die Funkantenne (35) als Kopplungselement (36a) einen an dem Betätigungsorgan (12) vorgesehenen Streifenleiter aufweist.

3. Installationsgerät nach einem der Ansprüche 1 oder 2 **dadurch gekennzeichnet, dass** die Platine (24) in einer passenden Ausnehmung der Trägerplatte (20) festgesetzt ist.

4. Installationsgerät nach einem der Ansprüche 1-3, **dadurch gekennzeichnet, dass** die Platine (24) abstehende Kontaktstifte (26) aufweist, die in eine Fassung an der Frontseite des Gerätesockels (10) einsteckbar sind.

5. Installationsgerät nach einem der Ansprüche 1-4, **dadurch gekennzeichnet, dass** Platinen (24) von unterschiedlichem Typ vorgesehen sind, die mit derselben Trägerplatte (20) zusammenpassen.

## Claims

1. Installation device comprising
a device base (10);
a metal support frame (11) connected to the front side of the device base (10), an operating element (12) being applied in front of said frame;
a support plate (20) comprising a circuit board (24) located on the front side of the support plate (20), the support plate (20) being mounted to the rear side of the operating element (12) designed as a cover;
a radio transmitter (25) included on the circuit board (24); and
a radio antenna (35) coupled with the radio transmitter (25),
**characterized in that**
the radio antenna (35), including a coupling element (36a), is printed on the rear side of the operating element (12) designed as a molded plastic part, the coupling element (36a) forming a waveguide coupling together with a second coupling element (36b) arranged congruently oppositely on the circuit board (24), so that the radio transmitter (25) is coupled with the antenna (35) in a contactless manner by waveguide coupling.

2. Installation device of claim 1, **characterized in that** the radio antenna (35) comprises a strip conductor as the coupling element (36a), said strip conductor being provided on the operating element (12).

3. Installation device of one of claims 1 or 2, **characterized in that** the circuit board (24) is fixed in a fitting recess of the support plate (20).

4. Installation device of one of claims 1 - 3, **characterized in that** the circuit board (24) has protruding contact pins (26) adapted to be inserted into a socket in the front side of the device base (10).

5. Installation device of one of claims 1-4 **characterized in that** circuit boards (24) of different types are provided that fit with the same support plate (20).

## Revendications

1. Appareil d'installation avec une embase d'appareil (10), un cadre de support métallique (11) attaché à l'embase d'appareil (10) à la face avant de cette dernière, devant quel cadre est posé un organe d'actionnement (12), une plaque de support (20) avec une platine (24) qui se trouve sur la face avant de la plaque de support (20), la plaque de support (20) étant fixée sur la face arrière de l'organe d'actionnement (12) configuré comme couvercle, un transmetteur radio (25) disposé sur la platine (24), et une antenne radio (35) accouplée au transmetteur radio (25),
**caractérisé en ce que**
l'antenne radio (35), y compris un élément d'accouplement (36a), est imprimée sur la face arrière de l'organe d'actionnement (12) réalisé comme pièce moulée en matière synthétique, l'élément d'accouplement (36a) formant, avec un second élément d'accouplement (36b) disposé de manière congruente en regard sur la platine (24), un accouplement de guide d'onde, si bien que le transmetteur radio (25) soit accouplé à l'antenne (35) sans contact par l'accouplement de guide d'onde.

2. Appareil d'installation selon la revendication 1, **caractérisé en ce que** l'antenne radio (35) comprend, comme élément d'accouplement (36a), un conducteur à ruban prévu sur l'organe d'actionnement (12).

3. Appareil d'installation selon l'une des revendications 1 ou 2, **caractérisé en ce que** la platine (24) est fixée dans un évidement approprié de la plaque support (20).

4. Appareil d'installation selon l'une des revendications 1 à 3, **caractérisé en ce que** la platine (24) comprend des tiges de contact (26) en saillie qui sont adaptées pour être enfichées dans un socle sur la face avant de l'embase d'appareil (10).

5. Appareil d'installation selon l'une des revendications 1 à 4, **caractérisé en ce que** sont prévues des platines (24) de types différents allant ensemble avec la même plaque de support (20).
